# NEW EUROPEAN PATENT SPECIFICATION

(11) **EP 0 719 092 B2**
(45) Date of publication and mention of the opposition decision: **27.02.2008**
(45) Mention of the grant of the patent: 12.01.2000
(21) Application number: 93922694.0
(22) Date of filing: 15.09.1993
(51) Int. Cl.: A23G 4/00

(54) **HARD COATED CHEWING GUM WITH IMPROVED SHELF LIFE, WITH XYLITOL AND POLYOL COATINGS**
HARTBESCHICHTETER KAUGUMMI MIT VERBESSERTER BESTÄNDIGKEIT, MIT XYLITOL- UND POLYOL-SCHICHTEN
GOMME A MACHER A ENROBAGE DUR A BASE DE XYLITOL ET DE POLYOL A DUREE DE CONSERVATION PROLONGEE

(43) Date of publication of application: 03.07.1996
(73) Proprietor: WM. WRIGLEY JR. COMPANY, Chicago, Illinois 60611 (US)
(72) Inventor: REED, Michael A., Merrillville, IN 46410 (US); RICHEY, Lindell C., Lake Zurich, IL 60047 (US); HOOK, Jeffrey S., Berwyn, IL 60402 (US); SCHNELL, Philip G., Downers Grove, IL 60515 (US)
(74) Representative: Hayes, Adrian Chetwynd
(86) International application number: PCT/US1993/008673
(87) International publication number: WO 1995/007621

(56) References cited:
- EP-A- 0 229 594
- WO-A-93/18663
- US-A- 4 127 677
- US-A- 4 681 766
- US-A- 4 792 453
- US-A- 4 828 845
- Scientific & Technological Surveys, ISSN 0144-3074, No.173,June 1992, pages 30-35

## Description

This invention relates to a hard-coated chewing gum in which the hard coating is composed of xylitol and another polyol, having an improved coating quality and extended shelf life.

This invention relates to a chewing gum in pellet form, having one or more sequentially added coats of xylitol and another polyol. The hard pellets are prepared by coating a gum core with syrups of xylitol and another polyol. The coated gum has improved coating quality and longer shelf life.

Chewing gums, including pellet chewing gums, are frequently enclosed with hard or soft coatings. Coatings provide an opportunity for the manufacturer to vary product characteristics such as taste, appearance and nutritional value. In recent years, efforts have been devoted to producing sugarless hard coatings for use in chewing gum. Sugarless coatings which have been investigated include coatings containing compounds such as xylitol, sorbitol, mannitol, and hydrogenated starch hydrolysates.

Sugarless xylitol coated pellet gums have become very popular as products and are being manufactured in Europe and Canada. The cost of xylitol is quite high, and partial replacement of the xylitol in the coating would be an advantage. Two polyols in the same coating solution cause problems in the coating process, but sequential coating of gum pellets with two solutions, each containing a polyol, one of which is xylitol, was found to be an acceptable process. PCT Patent application No. WO 93/18663, filed March 25, 1993, by Reed and Orr, taught sequential coating with a combination of hydrogenated isomaltulose and xylitol.

coated Sugarless gums possess excellent appearance, taste, texture, mouth feel, and other desirable properties. It has been found that the relatively anhydrous gum center has the capability of pulling moisture from hydrogenated isomaltulose-containing coatings, causing the coating to exhibit superior hardness. This moisture-pulling from the gum center is attributable, in large part, to the use of glycerin as a softener in the gum center. The moisture-pulling effect is the most pronounced in hard coated chewing gums which contain moderate or relatively high amounts of glycerin in the chewing gum center, on the order of from 5 to 15 percent by weight of the chewing gum center.

The tendency of glycerin to pull moisture from hydrogenated isomaltulose-containing coating can operate as a disadvantage in certain pellet-shaped hard coated chewing gums which, due to their shape, are difficult to isolate from a moisture-containing environment by packaging. For example, pellet gum which is shaped like pillows is difficult to protect from moisture because it is difficult to form a good quality, low or non-moisture permeable package which is suitable for these pellets.

The continuous drying and absorption of moisture from the atmosphere reduces the shelf life of the pellet gum by causing the coating to soften and lose its desirable texture, appearance and mouth feel. Thus, the coating itself must be sufficiently shelf stable against moisture absorption so as not to allow the coating to deteriorate during its shelf life.

U.S. Patent 5248508, filed March 23, 1992, by Michael A. Reed and Jeffrey S. Hook, entitled HARD COATED GUM WITH IMPROVED SHELF LIFE, discloses a chewing gum in pellet form which includes a center portion and an outer coating which contains hydrogenated isomaltulose.

Coating with xylitol is described in U.S. Patents 4,105,801, issued August 8, 1978, to Dogliotti; 4,127,677, issued November 28, 1978, to Fronczowski et al.; 4,146,653, issued March 27, 1979, to Mader et al.; 4,681,766, issued July 21, 1987, to Huzinec et al.; 4,786,511, issued November 22, 1988, also to Huzinec et al.; and 4,828,845, issued May 9,1989, to Zamudio-Tena et al.

Patents and publications which discuss lactitol include U.S. Patents 3,973,050, issued August 3, 1976, to Hayashibara et al. (foods and drinks containing lactitol as a sweetener); 4,973,486, issued November 27, 1990, to Matsumoto et al. (formulation of lactitol-containing food); and 4,999,058, issued March 12, 1991, and 5,160,546, issued November 3, 1992, both to Kawashima et al. (production of lactitol trihydrate; use in chewing gun, column 6 of each patent); British Patent 1,253,300, Hayashibara, published November 10, 1971 (food materials containing lactitol); PCT published Patent Applications WO 90/06317, published June 14, 1990, and WO 92/16542, published October 1, 1992, both in the names of Heikkilä et al. (preparation of crystalline lactitol and use as sweetening agent; use in chewing gums mentioned at page 1, lines 10-11 of '317 and page 5, line 13 of '542); Ir. I.H. Blankers, PURAC biochem by, LACTY^{®} - A UNIQUE REDUCED CALORIE SWEETENER (October, 1992); CCA biochem b.v., Application Information, Hard Panned Chewing Gum (undated, 1 page); CCA biochem b.v., Application Information, Starting Point Formulation for a Lacty^{®}-containing Chocolate and Chewing Gum (undated, 1 page); CCA biochem b.v., INTERNATIONAL APPROVAL SITUATION FOR LACTITOL (1988)(1 page); CCA biochem by, LACTY^{®} / A NEW REDUCED CALORIE SWEETENER (undated)(page 5, use in chewing gun); CCA biochem b.v., Product Data, LACTY^{®}-M (undated, 1 page); Ir. C.H. den Uijl, CCA biochem by, LACTY^{®}, PROPERTIES AND APPLICATIONS OF THIS NEW REDUCED CALORIE SWEETENER (1987); (anon.) Lacty^{®}, A New Bulk Sweetener, CONFECTIONERY PRODUCTION, p. 656 (September 1990); PURAC biochem, LACTY^{®} CONTAINING CHEWING GUM (undated, 1 page); and PURAC biochem, LACTY^{®} / A UNIQUE REDUCED CALORIE SWEETENER (undated)(page 5, use in chewing gum).

Patents and publications which discuss maltitol include U.S. Patents 4,556,565, issued December 3, 1985, to Arima et al. (sweetening compositions comprising maltitol); 4,623,543, issued November 18, 1986, to Motegi et al. (non-hygroscopic candies containing maltitol); 4,717,765, issued January 5, 1988, to Hirao et al. (production and use of maltitol anhydrous crystals; used in chewing gum in Example 12 in column 13); 4,840,797, issued June 20, 1989, to Boursier (maltitol coating); 4,933,188, issued June 12, 1990, to Cherukuri et at. (maltitol sweetening/bulking agent); 4,959,225, issued September 25, 1990, to Wong et al. (sweetening compositions comprising maltitol); and 5,120,551, issued June 9. 1992, to Yatka et al. (maltitol syrup); European Patent Publication 0,390,299, published October 10, 1990, in the names of Bakal et al. (foodstuffs containing maltitol); and Japanese Patent Publications 53 (1978) - 127,858, published November 8, 1978 in the names of Fukuda et al. (chewing gum which may include maltitol) and 4 (1992) - 287,659, published October 13.1992. in the names of Shigeni et al. (low-calorie sweetener containing maltitol).

Other patents and publications which may be of interest include U.S. Patents 5,017,400, issued May 21, 1991, to Olinger et al. (non-cariogenic sweetener containing xylitol and maltitol; used in chewing gums, see Example I in columns 5-6); 5,135,761, issued August 4, 1992, to Dave et al. (coated chewing gum with emulsifier subcoat); 5,144,024, issued September 1, 1992, to Pepper et al. (shelf stable liquid xylitol compositions comprising non-xylitol polyols such as maltitol); 5,171,589, issued December 15, 1992, to Richey et al. (coated chewing gum polished with colored wax); and PCT published Patent Application WO 91/07100, published May 30, 1991, in the names of Oravainen et al. (hard candy containing xylitol and optionally maltitol or lactitol). See also PCT Patent Application PCT/US92/11195, filed December 23, 1992, in the names of Yatka et al., to be published about June, 1994 (chewing gum containing lactitol).

This invention is directed to a hard-coated chewing gum for example a pellet chewing gum, whose pellet shape does not lend itself to packaging of a type that would protect the pellets from atmospheric moisture. The hard-coated chewing gum is coated successively (i.e., not: simultaneously) with xylitol and another polyol. The other polyol is preferably lactitol or maltitol, but other polyols such as sorbitol may also be used.

According to the present invention there is provided a dual composition hard coated chewing gum, comprising:
from 35 to 90 wt% gum centre, comprising a bulk portion, chewing gum base and one or more flavouring agents; and
from 10 to 65 wt% outer coating containing from 50 to 100 wt% xylitol and non-xylitol polyol, the outer coating comprising at least two sequential layers at least one layer of which comprises from 50 to 100 wt% xylitol and at least one other layer of which comprises from 50 to 100 wt% non-xylitol polyol but does not contain 50 wt% or more hydrogenated isomaltulose.

According to a further embodiment of the present invention there is provided a method of forming a dual composition hard coated chewing gum, comprising the steps of:
forming a gum centre including a bulk portion, a chewing gum base portion, and one or more flavouring agents;
forming a non-xylitol polyol liquid coating syrup comprising solvent and from 50 to 80 wt% non-xylitol polyol; applying a plurality of coats of the non-xylitol polyol liquid coating syrup to the gum centre:
forming a xylitol liquid coating syrup comprising solvent and from 50 to 85 wt% xylitol;
applying a plurality of coats of the xylitol liquid coating syrup to the non-xylitol polyol-coated gum centre; and
evaporating the solvent from each coat of the xylitol and non-xylitol polyol liquid coating syrups, prior to applying the next coat;
the number of coats of the xylitol and of the non-xylitol polyol which are applied being sufficient to provide a coating constituting of from 10 to 65 wt% of the total coated chewing gum product.
Chewing gum pellets are subject to constant exposure to atmospheric moisture during shelf storage. The present invention provides a dual composition hard-coated chewing gum which gives improved coating quality and is shelf stable under these conditions.

The chewing gum of the invention includes a center portion and an dual composition outer coating. The outer coating consists of layers having two compositions. One layer composition is all or primarily xylitol; and the other is all or primarily lactitol or maltitol (or another polyol, e.g. sorbitol), hereinafter the non-xylitol polyol.

The outer coating preferably contains from 50 to 100 weight percent xylitol and the non-xylitol polyol. The outer coating may also include sweeteners, whiteners, colorants, coating adjuvants and flavours.

The total weight of the coating constitutes from 10 to 65 weight percent of the coated chewing gum product.

Any conventional chewing gum center formulation may be used for the gum center. Preferably, however, the gum center is sugarless and includes sorbitol, mannitol, xylitol, lactitol, maltitol and/or hydrogenated starch hydrolyzate, and an aqueous sorbitol liquid. The gum center constitutes from 35 to 90 weight percent of the chewing gun product.

With the foregoing in mind, it is a feature and advantage of the invention to provide a dual composition hard coated chewing gum which preferably retains its hardness, texture, appearance and mouth feel during shelf storage which involves constant exposure to the atmosphere.

It is also a feature and advantage of the invention to provide a dual composition hard coated shelf-stable chewing gum which preferably does not absorb significant quantities of moisture from the atmosphere.

It is also a feature and advantage of the invention to provide a dual composition hard coated shelf-stable chewing gum which preferably is suitable for pellet gum having pellet shapes which do not lend themselves readily to protective packaging with respect to the atmosphere.

It is also a feature and advantage of the invention to provide a method of making an improved dual composition hard coated shelf-stable chewing gum.

The foregoing and other features and advantages of the invention will become further apparent from the following detailed description. The detailed description is to be construed as illustrative rather than limitative, with the scope of the invention being defined by the appended claims and equivalents thereof.

In accordance with the invention, a dual composition hard coated chewing gum is provided which has a dual composition hard outer coating and a softer chewing gum center portion.

As noted in U.S. Patents 4,105,801; 4,127,677; 4,146,653; 4,681,766; 4,786,511; and 4,828,845, referred to above, xylitol, a polyol sugar substitute, can be used to coat various types of products, including chewing gum. Xylitol makes a quality coating for chewing gum, and a number of xylitol chewing gum products are currently on the market in the United States and Europe. Although the quality of product is good using a xylitol coating, the cost of xylitol is high.

It has been found, according to the present invention, that lactitol, maltitol and sorbitol are other polyol sugar substitutes that can be used in coating hard gum centers, in combination with xylitol; and in fact, any edible polyol that can be crystallized to form a quality coating on a pellet may be used with xylitol according to this invention. Pure sorbitol may for example be used, although pure sorbitol would not be expected to reduce moisture absorption.

Another option is to first coat the gum center with a combination of sorbitol and hydrogenated starch hydrolyzate (lycasin(^{™})) or a combination of polyols to obtain a soft coating. A soft coating is like a jelly bean coating and may be done with combinations of polyol solutions and powders of polyol combinations. This soft inner coating may then be coated with a hard shell xylitol coating to obtain a unique product.

By combining a xylitol coating and a non-xylitol polyol coating in this invention, the cost of coating with xylitol can be significantly reduced, while still maintaining some of the advantages of xylitol. Also, by coating a chewing gum pellet with layers of both xylitol and a non-xylitol polyol, both polyols may give a significant shelf life improvement to the pellet gum. Since lactitol, maltitol, and other polyol sugar substitutes are less hygroscopic than xylitol, moisture absorption of the pellet may be reduced, giving extended shelf life to the product in unfavorable storage conditions and packaging problems.

The invention involves first preparing a soft (by comparison to the coating which is to follow) chewing gum center portion, and forming it into gum pellets by conventional means. The pelletized chewing gum centers are then coated with one or more sequentially applied layers of xylitol and non-xylitol polyol coatings.

The xylitol coating may be accomplished in a traditional manner as disclosed by one of the aforementioned U.S. Patents 4,105,801; 4,127,677; 4,146,653; 4,681,766; 4,786,511; and 4,828,845. A preferred coating process, applicable to xylitol and to non-xylitol polyols, is described below.

The preferred coating process uses a solution of the material to be applied. The first solution used for coating contains the non-xylitol polyol, which should contain from about 50% non-xylitol polyol solids up to the saturation point of the non-xylitol polyol in the solvent, and preferably from 60 to 75 weight percent non-xylitol polyol solids. The second solution used for coating contains xylitol, which should contain from about 50% xylitol solids up to the saturation point of xylitol in the solvent, which is about 85% xylitol solids in the case of a water solvent, and preferably from 60 to 75 weight percent xylitol solids. The syrups may comprise xylitol or a non-xylitol polyol dissolved in water or any other food quality solvent in an amount sufficient to yield a hard coating comprising from 50 to 100 weight percent xylitol or non-xylitol polyol. More preferably, however, the syrup will comprise an amount of xylitol or non-xylitol polyol sufficient to yield a hard coating comprising greater than about 90 weight percent xylitol or non-xylitol polyol. Furthermore, the syrups and thus the layers of coating may contain both xylitol and a non-xylitol polyol, and they may contain minor quantities of other sugar substitutes such as sorbitol and mannitol in addition to the primary non-xylitol polyol.

Each coating step adds a small amount of xylitol or other polyol, depending on various factors including chiefly the concentration of the xylitol or the non-xylitol polyol in the coating syrup. Each individual coating step adds roughly 1% to the then-current weight of the pellet being coated.

The total amount of these xylitol and non-xylitol polyol coatings may be from 10% to 65% by weight of the product obtained by the series of coatings, i.e., after the last coating step, the product contains from 10% to 65% xylitol and non-xylitol polyol; and from 35% to 90% gum center, by weight of the total product. Reaching this weight of coating will typically require from 10 to 65 individual coating steps. A preferred product contains from 20% to 50% by weight of combined xylitol and non-xylitol polyol coating, and from 50 to 80% gum center.

It is preferred that the layers of non-xylitol polyol be applied first, and after the non-xylitol polyol coatings are completed, coatings of xylitol be applied in a similar fashion over the non-xylitol polyol coatings.

The ratio of non-xylitol polyol to xylitol in the coatings may vary widely, but the ratio is preferably about 1:1.

The dual composition hard outer coating includes layers of xylitol and non-xylitol polyol coatings. Each of the two components of the dual composition hard outer coating (i.e., the xylitol component and the non-xylitol polyol component) may be present as a single layer or as a plurality of layers. The dual composition hard coating may be present in any thickness or amount which is commercially acceptable.

Xylitol is a pentahydric alcohol having the empirical formula C₅H₁₂O₅, and a molecular weight of 152.15. Its structural formula is HO-CH₂-CHOH-CHOH-CHOH-CH₂-OH. Xylitol is a crystalline compound. Its stabile solid form melts at 93° to 94.5° C; the metastable form melts at 61° to 61.5° C. The solubility in water of the stabile form is 64.2 grams per 100 grams of solution at room temperature. Its relative sweetness is about 90% of that of sucrose. It is readily digested and is easily metabolized by diabetics. It is commonly used as an oral and intravenous nutrient, as a dietary additive, and in anticaries preparations.

Lactitol and maltitol, preferred for use in the present invention, are both polyols of the empirical formula C₁₂H₂₄O₁₁, and are reduced (hydrogenated) lactose and maltose, respectively. Lactitol and maltitol differ from the disaccharide sugars lactose and maltose in that one of the component sugars is reduced to a linear polyol structure, rather than the ring structure of the disaccharide sugar. Formal chemical names for lactitol and maltitol are 4-O-(β-galactosyl)-D-glucitol and 4-O-(α-glucoparanosyl)-D-glucitol, respectively. The structural formula for lactitol is given in British Patent 1,253,300, at page 2; in Ir. I.H. Blankers, PURAC biochem by, LACTY^{®}- A UNIQUE REDUCED CALORIE SWEETENER (October, 1992), at pages 2 and 6; and elsewhere in the LACTY^{®} trade literature. The structural formula for maltitol is given in U.S. Patent 4,933,188, issued June 12, 1990, to Cherukuri et al., in column 5, and in European Patent Publication 0,390,299, published October 10, 1990, in the names of Bakal et al., at page 3.

Lactitol is available from Purac America, Inc. in the United States, or from PURAC biochem in the Netherlands, under the trademark LACTY^{®}. Maltitol is available from Roquette Corporation. Both materials are obtained in a crystalline powder form and since they are very soluble in water, can form concentrated coating solutions of 60-80% solids at high temperature.

Either the xylitol component, the non-xylitol polyol component, or both components of the coating, may also contain other ingredients such as flavoring agents, artificial sweeteners and dispersing agents, coloring agents, film formers, and binding agents. Flavoring agents contemplated by the present invention include those commonly known in the art such as essential oils, synthetic flavors or mixtures thereof, including but not limited to oils derived from plants and fruits such as citrus oils, fruit essences, peppermint oil, spearmint oil, other mint oils, clove oil, oil of wintergreen, anise and the like. The flavoring agents may be added to the coating syrup in an amount such that the coating will contain from 0.2 to 1.2 weight percent flavoring agent and preferably from 0.7 to 1.0 weight percent flavoring agent.

Artificial sweeteners contemplated for use in the coating include but are not limited to synthetic substances, saccharin, thaumatin, alitame, saccharin salts, aspartame, sucralose and acesulfame-K. The artificial sweetener may be added to the coating syrup in an amount such that the coating will contain from 0.05 to 0.3 weight percent and preferably from 0.10 to 0.15 weight percent artificial sweetener.

Dispersing agents are often added to syrup coatings for the purpose of whitening and tack reduction. Dispersing agents contemplated by the present invention to be employed in the coating syrup include titanium dioxide, talc, or any other antistick compound. Titanium dioxide is a presently preferred dispersing agent of the present invention. The dispersing agent may be added to the coating syrup in amounts such that the coating will contain from 0.1 to 1.0 weight percent and preferably from 0.3 to 0.6 weight percent of the agent.

Coloring agents are preferably added directly to the syrup in the dye or lake form. Coloring agents contemplated by the present invention include food quality dyes. Film formers preferably added to the syrup, include methyl cellulose, gelatins, hydroxypropyl cellulose, ethyl cellulose, hydroxyethyl cellulose, carboxymethyl cellulose and the like and combinations thereof. Binding agents may be added either as an initial coating on the chewing gum center or may be added directly into the syrup. Binding agents contemplated by the present invention include gum arabic, alginate, cellulosics, vegetable gums and the like.

The softer chewing gum center includes a water soluble bulk portion, a generally water insoluble chewing gum base and one or more flavoring agents. The water soluble portion dissipates over a period of time during chewing, while the gum base portion remains in the mouth throughout the chewing process.

The insoluble gum base generally includes elastomers, resins, fats, oils, waxes, softeners and inorganic fillers. The elastomers may include polyisobutylene, isobutylene-isoprene copolymer, styrene butadiene rubber and natural latexes such as chicle. The resins may include polyvinyl acetate, ester gums and terpene resins. Low molecular weight polyvinyl acetate is a preferred resin. Fats and oils may include animal fats such as lard and tallow, vegetable oils such as soybean and cottonseed oils, hydrogenated and partially hydrogenated vegetable oils, and cocoa butter. Commonly used waxes include petroleum waxes such as paraffin and microcrystalline wax, natural waxes such as beeswax, candelilla, carnauba and polyethylene wax. The present invention contemplates the use of any commercially acceptable chewing gum base.

The gum base typically also includes a filler component such as calcium carbonate, magnesium carbonate, talc, dicalcium phosphate and the like; softeners, including glycerol monostearate and glycerol triacetate; and optional ingredients such as antioxidants, colors and emulsifiers. The gum base constitutes from 5 to 95% by weight of the chewing gum center, more typically from 10 to 50% by weight of the chewing gum center, and most commonly from 25 to 35% by weight of the chewing gum center.

The water soluble portion of the chewing gum center may include softeners, bulk sweeteners, high intensity sweeteners, flavoring agents and combinations thereof. Softeners such as glycerin are added to the chewing gum center in order to optimize the chewability and mouth feel of the gum. The softeners, which are also known as plasticizers or plasticizing agents, constitute from 0.5 to 15% by weight of the chewing gum center.

Aqueous sweetener solutions such as those containing sorbitol, hydrogenated starch hydrolysates, syrups of xylitol, lactitol, maltitol, hydrogenated isomaltulose and other polyols, corn syrup and combinations thereof, may also be used as softeners and binding agents in the chewing gum center.

Bulk sweeteners constitute from 5 to 90% by weight of the chewing gum center, more typically from 20 to 80% by weight of the chewing gum center and most commonly from 30 to 60% by weight of the chewing gum center. Bulk sweeteners preferably include sugarless sweeteners and components. Sugarless sweeteners include components with sweetening characteristics but are devoid of the commonly known sugars. Sugarless sweeteners include but are not limited to sugar alcohols such as sorbitol, mannitol, xylitol, hydrogenated starch hydrolysates, lactitol, maltitol, hydrogenated isomaltulose, and the like, alone or in combination.

High intensity sweeteners may also be present and are commonly used with sugarless sweeteners. When used, high intensity sweeteners typically constitute from 0.001 to 5% by weight of the chewing gum center, preferably from 0.01 to 1% by weight of the chewing gum center. Typically, high intensity sweeteners are at least 20 times sweeter than sucrose. These may include but are not limited to sucralose(^{™}), aspartame, salts of acesulfame, alitame, saccharin and its salts, cyclamic acid and its salts, glycyrrhizin, dihydrochalcones, thaumatin, monellin, and the like, alone or in combination.

Combinations of sugar and/or sugarless sweeteners may be used in the chewing gum center. The sweetener may also function in the chewing gum in whole or in part as a water soluble bulking agent. The softener may also provide additional sweetness.

The flavoring agent should generally be present in the chewing gum center in an amount within the range of from 0.1 to 15% by weight of the chewing gum center, preferably from 0.2 to 5% by weight of the chewing gum center, most preferably from 0.5 to 3% by weight of the chewing gum center. Flavoring agents may include essential oils, synthetic flavors or mixtures thereof including but not limited to oils derived from plants and fruits such as citrus oils, fruit essences, peppermint oil, spearmint oil, other mint oils, clove oil, oil of wintergreen, anise and the like. Artificial flavoring agents and components may also be used in the chewing gum center. Natural and artificial flavoring agents may be combined in any sensorially acceptable fashion.

Optional ingredients such as colors, emulsifiers, pharmaceutical agents and additional flavoring agents may also be included in chewing gum center.

The chewing gum center is generally manufactured by sequentially adding the various chewing gum ingredients to any commercially available mixer known in the art. After the ingredients have been thoroughly mixed, the gum mass is discharged from the mixer and shaped into the desired form such as by extruding into chunks, or casting into pellets.

Generally, the ingredients are mixed by first melting the gum base and adding it to the running mixer. The gum base may alternatively be melted in the mixer. Color and emulsifiers can be added at this time.

A softener such as liquid sorbitol solution can be added next along with syrup and part of the bulk portion. Further parts of the bulk portion may then be added to the mixer. The flavoring agents are typically added with the final part of the bulk portion. The entire mixing process typically takes from five to fifteen minutes, although longer mixing times are sometimes required. Those skilled in the art will recognize that variations of this mixing procedure, or other mixing procedures, may be followed.

After the chewing gum center has been manufactured and shaped, the xylitol and non-xylitol polyol-containing coatings can be applied. The coating is initially present as a liquid syrup which contains from 30 to 80 or 85 weight percent of the coating ingredients previously described herein, and from 15 or 20 to 70 weight percent of a solvent such as water. In general, the hard coating process is carried out in a rotating pan. Sugarless gum center tablets to be coated are placed into the rotating pan to form a moving mass.

The material or syrup which will eventually form the hard coating, is applied or distributed over the gum center tablets. Flavoring agents may be added before, during and after applying the syrup to the gum centers. Once the coating has dried to form a hard surface, additional syrup additions can be made to produce a plurality of coatings or multiple layers of hard coating.

In the hard coating panning procedure, syrup is added to the gum center tablets at a temperature range of from 38°C (100°F). to 93°C (200°F). Preferably, the syrup temperature is from 65°C 150°F. to 77°C 170°F. Most preferably, the syrup temperature should be maintained at about 70°C (158°F). throughout the process in order to prevent the polyol in the syrup from crystallizing. The syrup may be mixed with, sprayed upon, poured over, or added to the gum center tablets in any way known to those skilled in the art.

Each component of the coating on the gum center tablets may be applied in a single hard layer or in a plurality of hard layers. In general, a plurality of layers is obtained by applying single coats, allowing the layers to dry, and then repeating the process. The amount of solids added by each coating step depends chiefly on the concentration of the coating syrup. Any number of coats may be applied to the gun center tablet. Preferably, no more than about 75 coats are applied to the gum center tablets. More preferably, less than about 60 coats are applied and most preferably, from 30 to 60 coats are applied. In any event, the present invention contemplates applying an amount of syrup sufficient to yield a dual composition hard coated chewing gum product containing from 10 to 65 weight percent coating. Preferably, the final product will contain from 20 to 50 weight percent hard coating.

Those skilled in the art will recognize that in order to obtain a plurality of hard coated layers, a plurality of premeasured aliquots of coating syrup may be applied to the gum center tablets. It is contemplated, however, that the volume of aliquots of syrup applied to the gum center tablets may vary throughout the coating procedure.

The present invention contemplates that a flavoring agent may be added to the syrup, or applied to the gum center tablets while the syrup coating is drying or after the coating has dried. Furthermore, the flavoring agent may be applied anywhere within the sequence of coats, for example, after the third, twelfth, eighteenth, etc., coats.

Once a coating of syrup is applied to the gum center tablets, the present invention contemplates drying the wet syrup in an inert medium. A preferred drying medium comprises air. Preferably, forced drying air contacts the wet syrup coating in a temperature range of from 26°C (80°F) to 46°C (115°F). More preferably, the drying air is in the temperature range of from 32°C (90°F) to 41°C (105°F). The invention also contemplates that the drying air possess a relative humidity of less than about 15 percent. Preferably, the relative humidity of the drying air is less than about 8 percent.

The drying air may be passed over and admixed with the syrup coated gum centers in any way commonly known in the art. Preferably, the drying air is blown over and around the syrup coated gum center at a flow rate, for large scale operations, of about 79 cubic meters (2800 cubic feet) per minute. If lower quantities of material are being processed, or if smaller equipment is used, lower flow rates would be used. If a flavoring agent is applied after a syrup coating has been dried, the present invention contemplates drying the flavoring agent with or without the use of a drying medium.

A wide range of changes and modifications to the embodiments of the invention described above will be apparent to persons skilled in the art. For example, while the invention is described with respect to hard-coated chewing gum, it will be appreciated that the dual coating process is applicable to coating other food products, such as candies, in which a combined xylitol and non-xylitol polyol coating would have utility.

### EXAMPLES

The invention will now be illustrated with Examples, which are not to be construed as imposing limitations on the invention.

Three gum center compositions, having the formulas set out below, were made on production scale equipment and used in the coating tests.

| | Center Formula A | Center Formula B | Center Formula C |
|---|---|---|---|
| Sorbitol | 48.06 | 43.64 | 44.06 |
| Base | 33.0 | 33.0 | 33.0 |
| Calcium Carbonate | 13.0 | 13.0 | 13.0 |
| Glycerin | 4.0 | 6.5 | 8.0 |
| Peppermint Flavor | 1.8 | 2.5 | 1.8 |
| Water | --- | 0.8 | --- |
| Color | --- | 0.2 | --- |
| Encapsulated aspartame | 0.14 | 0.36 | 0.14 |
| TOTAL | 100.00 | 100.00 | 100.00 |

### COMPARATIVE EXAMPLE 1 - ALL XYLITOL COATING

Using center formula C, pellets were coated with two xylitol syrups which provided a coating of 91% xylitol, 6.9% gum arabic, 1.2% peppermint flavor, and 0.9% titanium dioxide whitener, then polished with carnauba wax. The first coating solution (used for the first approximately 20 coats) contained an 80% xylitol solids syrup, gum arabic as a 33% aqueous solution, and titanium dioxide. The second coating syrup contained a 75% xylitol solids syrup, gum arabic as a 33% aqueous solution, and titanium dioxide. The second coating solution (used for the last approximately 20 coats) contained half the amount of gum arabic as the first and less xylitol solids, as indicated, but was otherwise the same as the first solution. About 40 coats in total were applied, with half the flavor added at the 5th coat, and other half at the 10th coat. The product, which was 34.5% coating and 65.5% gum center, had a white, crunchy hard shell coating typical of a xylitol coating.

### EXAMPLE 2 - XYLITOL AND HYDROGENATED ISOMALTULOSE COATING

Using center formula A, pellets were coated with a xylitol syrup and a hydrogenated isomaltulose syrup which provided a coating of 46% xylitol, 48.5% hydrogenated isomaltulose, 3.4% gum arabic, 1.2% peppermint flavor, and 0.9% titanium dioxide, then polished with carnauba wax.

The first coating solution (used for the first approximately 20 coats) contained a 75% hydrogenated isomaltulose solids syrup, gum arabic as a 33% aqueous solution, and titanium dioxide. The second coating syrup contained an 75% xylitol solids syrup, gum arabic as a 33% aqueous solution, and titanium dioxide. The second coating solution (used for the last approximately 20 coats) contained twice the amount of gum arabic as the first and substituted xylitol for hydrogenated isomaltulose, as indicated, but was otherwise the same as the first solution. About 40 coats in total were applied, with half the flavor added at the 5th coat, and other half at the 10th coat, as in Example 1. The product, which was 34.5% coating and 65.5% gum center, had a white, crunchier, harder coating than the xylitol coating of Example 1.

### EXAMPLE 3 - XYLITOL AND LACTITOL COATINGS

Using center formula A, 2500 grams of pellets were coated with lactitol in the first coating syrup, then xylitol in the second coating syrup. For the first coating syrup a coating solution of 1200 grams of lactitol, 66 grams of gum arabic, 10 grams TiO₂, and 933 grams of water was prepared and heated to boiling, and held at 71°C (160°F). During coating, half of 5.5. grams of peppermint flavor was added to each the 12th and 20th coats. With the initial piece weight at 1.04 grams, pellets were coated with lactitol to a piece weight of 1.33 grams for a product which was 21.8% lactitol coating and 78.2% gum center. For the second coating solution, a xylitol coating solution was prepared by mixing 420 grams of xylitol, 38 grams of gum arabic, 10 grams TiO₂, and 236 grams of water. A 1000 gram quantity of the lactitol-coated gum was then coated with the xylitol coating solution a piece weight of 1.58 grams, for a product which was 34.1% lactitol and xylitol coating and 65.9% gum center. The coating was white, slightly crunchier and harder than the xylitol coating of Example 1.

### EXAMPLE 4 - XYLITOL AND MALTITOL COATINGS

Using center formula B, 1500 grams of pellets were coated with maltitol in the first coating syrup, then xylitol in the second coating syrup. A coating solution of 1200 grams of maltitol, 66 grams of gum arabic, and 933 grams of water was prepared and heated to boiling and held at 71°C (160°F). During coating, half of 6.6 grams of flavor was added to each the 9th and 12th coats. With the initial piece weight of 0.94 grams, pellets were coated with maltitol to a piece weight of 1.18 grams, for a product which was 20.3% maltitol coating and 79.7% gum center. The xylitol coating solution was prepared as in Example 3 and used to overcoat 750 grams of the maltitol coated pellet to a piece weight of 1.44 grams, for a product which was 34.7% maltitol and xylitol coating and 65.3% gum center. The coating was white, crunchier and harder than the xylitol coating of Example 1.

### MOISTURE SORPTION TESTS

Examples 1-4 above were evaluated in accelerated shelf life tests to determine differences in moisture sorption capabilities. Five pieces of each sample were weighed in a dish and reweighed after storage at a temperature of 29°C (85°F) and 75% relative humidity. Percentage moisture gain was as follows:

### MOISTURE GAIN OF POLYOL/XYLITOL COATED GUM PELLETS

| | Example -> | 1 | 2 | 3 | 4 |
|---|---|---|---|---|---|
| Hours stored at 29,4°C (85°F)/75% R.H. | | | | | |
| 0 | | ----- | ----- | ----- | ----- |
| 7 | | 0.05 | 0.038 | 0.015 | 0.053 |
| 24 | | 0.40 | 0.046 | -0.002 | 0.056 |
| 31 | | 1.01 | 0.039 | 0.011 | 0.037 |
| 49 | | 2.64 | 0.051 | 0.025 | 0.043 |
| 55 | | 3.25 | 0.024 | -0.008 | 0.035 |
| 120 | | 4.18 | 0.020 | -0.880 | 0.028 |
| 127 | | 4.39 | 0.013 | -0.017 | 0.011 |

Results show that the dual coated products with hydrogenated isomaltulose, maltitol or lactitol overcoated with xylitol have much lower moisture gain than an all-xylitol product. Previous moisture sorption tests on all xylitol coated gum indicate the center formula has only a minor effect on moisture gain, so the significant reduction in moisture gain is believed to be due to the dual coating of xylitol with hydrogenated isomaltulose, maltitol or lactitol.

## Claims

1. A dual composition hard coated chewing gum, comprising:
from 35 to 90 wt% gum centre, comprising a bulk portion, chewing gum base and one or more flavouring agents; and
from 10 to 65 wt% outer coating containing from 50 to 100 wt% xylitol and non-xylitol polyol, the outer coating comprising at least two sequential layers having different compositions, at least one layer of which comprises from 50 to 100 wt% xylitol and at least one other layer of which comprises from 50 to 100 wt% non-xylitol polyol but does not contain 50 wt% or more hydrogenated isomaltulose.

2. A dual composition chewing gum as claimed in claim 1, wherein the layers of non-xylitol polyol are applied before the layers of xylitol.

3. A dual composition chewing gum as claimed in claim 1 or claim 2, wherein the gum base includes an elastomer selected from the group consisting of polyisobutylene, isobutylene-isoprene copolymer, styrene butadiene rubber, natural latexes, and combinations thereof.

4. A dual composition chewing gum as claimed in any one of claims 1 to 3. wherein the gum base includes a resin selected from the group consisting of polyvinyl acetate, terpene resins, ester gums, and combinations thereof.

5. A dual composition chewing gum as claimed in any one of claims 1 to 4, wherein the gum base includes fats and oils selected from the group consisting of animal fats, vegetable oils, hydrogenated vegetable oils, partially hydrogenated vegetable oils, cocoa butter, and combinations thereof.

6. A dual composition chewing gum as claimed in any one of claims 1 to 5. wherein the gum base includes a wax selected from the group consisting of paraffin wax, microcrystalline wax, candelilla, carnauba, polyethylene wax, and combinations thereof.

7. A dual composition chewing gum as claimed in any one of claims 1 to 6, wherein the gum base includes a filler component selected from the group consisting of calcium carbonate, magnesium carbonate, talc, dicalcium phosphate, and combinations thereof.

8. A dual composition chewing gum as claimed in any one of claims 1 to 7, wherein the gum base includes a softener selected from the group consisting of glycerol monostearate, glycerol triacetate, and combinations thereof.

9. A dual composition chewing gum as claimed in any one of claims 1 to 8, wherein the non-xylitol polyol is selected from the group consisting of lactitol, maltitol and sorbitol.

10. A dual composition chewing gum as claimed in any one of claims 1 to 9, wherein layers of the hard outer coating include at least 90 wt% xylitol.

11. A dual composition chewing gum as claimed in any one of claims 1 to 10, wherein layers of the hard outer coating include at least 90 wt% non-xylitol polyol.

12. A dual composition chewing gum as claimed in any one of claims 1 to 11, wherein the bulk portion includes a sugarless sweetener selected from the group consisting of sorbitol, mannitol, xylitol, hydrogenated starch hydrolysates, lactitol, maltitol, hydrogenated isomaltulose, and combinations thereof.

13. A dual composition chewing gum as claimed in any one of claims 1 to 12, wherein the bulk portion includes a high intensity sweetener selected from the group consisting of sucralose(^{™}), aspartame, salts of acesulfame, alitame, saccharin and its salts, cyclamic acid and its salts, glycyrrhizin, dihydrochalcones, thaumatin, monellin, and combinations thereof.

14. A dual composition chewing gum as claimed in any one of claims 1 to 13, wherein the gum centre constitutes from 50 to 80 wt% of the coated chewing gum and the outer coating constitutes from 20 to 50 wt% of the coated chewing gum.

15. A dual composition chewing gum as claimed in any one of claims 1 to 14. wherein the outer coating further comprises a flavouring agent.

16. A dual composition chewing gum as claimed in any one of claims 1 to 15. wherein the outer coaling further comprises a whitener.

17. A dual composition chewing gum as claimed in any one of claims 1 to 16. wherein the outer coating further comprises an artificial sweetener.

18. A method of forming a dual composition hard coated chewing gum, comprising the steps of:
forming a gum centre including a bulk portion, a chewing gum base portion, and one or more flavouring agents:
forming a non-xylitol polyol liquid coating syrup comprising solvent and from 50 to 80 wt% non-xylitol polyol;
applying a plurality of coats of the non-xylitol polyol liquid coating syrup to the gum centre:
forming a xylitol liquid coating syrup comprising solvent and from 50 to 85 wt% xylitol;
applying a plurality of coats of the xylitol liquid coating syrup to the non-xylitol polyol-coated gum centre: and
evaporating the solvent from each coat of the xylitol and non-xylitol polyol liquid coating syrups, prior to applying the next coat the number of coats of the xylitol and of the non-xylitol polyol which are applied being sufficient to provide a
coating constituting of from 10 to 65 wt% of the total coated chewing gum product.

19. A method as claimed in claim 18, wherein the liquid coating syrup is applied to the chewing gum centre by spraying.

20. A method as claimed in claim 18 or 19, wherein the solvent for the liquid coating syrup comprises water.

21. A method as claimed in claims 18 to 20, wherein at least one layer of the hard outer coating comprises a non-xylitol polyol selected from the group consisting of lactitol, maltitol and sorbitol.

22. A method as claimed in claims any one of 18 to 21, wherein at least one layer of non-xylitol polyol coating Is applied before at least one layer of xylitol coating.

23. A method as claimed in any one of claims 18 to 22, wherein
the gum centre is coated with a combination of sorbitol and hydrogenated starch hydrolyzate or a combination of polyols to obtain a soft inner coating; and
the soft inner coating is coated with a hard shell xylitol coating.

## Patentansprüche

1. Kaugummi mit einem harten Zwei-Komponenten-Überzug, der umfasst
35 bis 90 Gew.-% eines Gummikerns, enthaltend einen Quellmittelanteil (Füllmittelanteil), eine Kaugummibase und einen oder mehrere Geschmacksstoffe; und
10 bis 65 Gew.-% eines äußeren Überzugs, der 50 bis 100 Gew.-% Xylit und ein von Xylit verschiedenes Polyol enthält, wobei der äußere Überzug mindestens zwei aufeinanderfolgende Schichten mit unterschiedlichen Zusammensetzungen umfasst, von denen mindestens eine Schicht 50 bis 100 Gew.-% Xylit enthält, und von denen mindestens eine andere Schicht 50 bis 100 Gew.-% eines von Xylit verschiedenen Polyols enthält, jedoch nicht 50 Gew.-% oder mehr hydrierte Isomaltulose enthält.

2. Kaugummi nach Anspruch 1, worin die Schichten aus dem von Xylit verschiedenen Polyol vor den Schichten aus Xylit aufgebracht worden sind.

3. Kaugummi nach Anspruch 1 oder 2, worin die Kaugummibase ein Elastomer, ausgewählt aus der Gruppe, die besteht aus Polyisobutylen, Isobutylen/Isopren-Copolymer, Styrol-Butadien-Kautschuk, Naturlatices und Kombinationen davon, enthält.

4. Kaugummi nach einem der Ansprüche 1 bis 3, worin die Kaugummibase ein Harz, ausgewählt aus der Gruppe, die besteht aus Polyvinylacetat, Terpen-Harzen, Estergummis und Kombinationen davon, enthält.

5. Kaugummi nach einem der Ansprüche 1 bis 4, worin die Kaugummibase Fette und Öle, ausgewählt aus der Gruppe, die besteht aus tierischen Fetten, pflanzlichen Ölen, hydrierten pflanzlichen Ölen, teilweise hydrierten pflanzlichen Ölen, Kakaobutter und Kombinationen davon, enthält.

6. Kaugummi nach einem der Ansprüche 1 bis 5, worin die Kaugummibase ein Wachs, ausgewählt aus der Gruppe, die besteht aus Paraffinwachs, mikrokristallinem Wachs, Candelillawachs, Carnaubawachs, Polyethylenwachs und Kombinationen davon, enthält.

7. Kaugummi nach einem der Ansprüche 1 bis 6, worin die Kaugummibase eine Füllstoff-Komponente, ausgewählt aus der Gruppe, die besteht aus Calciumcarbonat, Magnesiumcarbonat, Talk, Dicalciumphosphat und Kombinationen davon, enthält.

8. Kaugummi nach einem der Ansprüche 1 bis 7, worin die Kaugummibase einen Weichmacher, ausgewählt aus der Gruppe, die besteht aus Glycerinmonostearat, Glycerintriacetat und Kombinationen davon, enthält.

9. Kaugummi nach einem der Ansprüche 1 bis 8, worin das von Xylit verschiedene Polyol ausgewählt wird aus der Gruppe, die besteht aus Lactit, Maltit und Sorbit.

10. Kaugummi nach einem der Ansprüche 1 bis 9, worin die Schichten des harten äußeren Überzugs mindestens 90 Gew.-% Xylit enthalten.

11. Kaugummi nach einem der Ansprüche 1 bis 10, worin die Schichten des harten äußeren Überzugs mindestens 90 Gew.-% eines von Xylit verschiedenen Polyols enthalten.

12. Kaugummi nach einem der Ansprüche 1 bis 11, worin der Quellmittelanteil (Füllmittelanteil) ein zuckerfreies Süßungsmittel, ausgewählt aus der Gruppe , die besteht aus Sorbit, Mannit, Xylit, hydrierten Stärkehydrolysaten, Lactit, Maltit, hydrierter Isomaltulose und Kombinationen davon, enthält.

13. Kaugummi nach einem der Ansprüche 1 bis 12, worin der Quellmittelanteil (Füllmittelanteil) ein starkes Süßungsmittel, ausgewählt aus der Gruppe, die besteht aus Sucralose^{™}, Aspartam, Acesulfam-Salzen, Alitam, Saccharin und Salzen davon, Cyclaminsäure und ihren Salzen, Glycyrrhizin, Dihydrochalconen, Thaumatin, Monellin und Kombinationen davon, enthält.

14. Kaugummi nach einem der Ansprüche 1 bis 13, worin der Gummikern 50 bis 80 Gew.-% des beschichteten Kaugummis ausmacht und der äußere Überzug 20 bis 50 Gew.-% des beschichteten Kaugummis ausmacht.

15. Kaugummi nach einem der Ansprüche 1 bis 14, worin der äußere Überzug außerdem einen Geschmacksstoff enthält.

16. Kaugummi nach einem der Ansprüche 1 bis 15, worin der äußere Überzug außerdem einen Weißmacher enthält.

17. Kaugummi nach einem der Ansprüche 1 bis 16, worin der äußere Überzug außerdem ein künstliches Süßungsmittel enthält.

18. Verfahren zur Herstellung eines Kaugummis mit hartem Zwei-Komponenten-Überzug, das die Stufen umfasst:
Herstellung eines Gummikerns, der einen Quellmittelanteil (Füllmittelanteil), einen Kaugummibasenanteil und einen oder mehrere Geschmacksstoffe enthält;
Herstellung eines flüssigen Beschichtungssirups auf Basis eines von Xylit verschiedenen Polyols, der Lösungsmittel und 50 bis 80 Gew.-% des von Xylit verschiedenen Polyols enthält;
Aufbringen einer Vielzahl von Überzügen aus dem flüssigen Beschichtungssirup auf Basis eines von Xylit verschiedenen Polyols auf den Gummikern;
Herstellung eines flüssigen Xylit-Beschichtungssirups, der Lösungsmittel und 50 bis 85 Gew.-% Xylit enthält;
Aufbringen einer Vielzahl von Überzügen aus dem flüssigen Xylit-Beschichtungssirup auf den mit dem von Xylit verschiedenen Polyol beschichteten Gummikern; und
Verdampfen des Lösungsmittels aus jedem Überzug aus dem flüssigen Xylit-Beschichtungssirup und dem flüssigen Beschichtungssirup auf Basis eines von Xylit verschiedenen Polyols vor dem Aufbringen des nächsten Überzugs, wobei die Anzahl der aufgebrachten Überzüge aus dem Xylit und dem von Xylit verschiedenen Polyol ausreicht, um einen Überzug zu ergeben, der 10 bis 65 Gew.-% des gesamten beschichteten Kaugummiprodukts ausmacht.

19. Verfahren nach Anspruch 18, worin der flüssige Beschichtungssirup durch Aufsprühen auf den Kaugummikern aufgebracht wird.

20. Verfahren nach Anspruch 18 oder 19, worin das Lösungsmittel für den flüssigen Beschichtungssirup Wasser umfasst.

21. Verfahren nach den Ansprüchen 18 bis 20, worin mindestens eine Schicht des harten äußeren Überzugs ein von Xylit verschiedenes Polyol, ausgewählt aus der Gruppe, die besteht aus Lactit, Maltit und Sorbit, enthält.

22. Verfahren nach einem der Ansprüche 18 bis 21, worin mindestens eine Schicht des Überzugs aus dem von Xylit verschiedenen Polyol aufgebracht wird, bevor mindestens eine Schicht aus dem Xylit-Überzug aufgebracht wird.

23. Verfahren nach einem der Ansprüche 18 bis 22, worin der Gummikern mit einer Kombination von Sorbit und hydriertem Stärkehydrolysat oder mit einer Kombination von Polyolen beschichtet wird zur Herstellung eines weichen inneren Überzugs; und
der weiche innere Überzug mit einem harten Hüllen-Xylit-Überzug beschichtet wird.

## Revendications

1. Gomme à mâcher à enrobage dur à deux composants comprenant:
de 35 à 90 % en poids d'une partie centrale de gomme comprenant une partie de charge, une base de gomme à mâcher et un ou plusieurs agents aromatisants ; et
de 10 à 65 % en poids d'un enrobage externe contenant de 50 à 100 % en poids de xylitol et d'un polyol autre que le xylitol, ledit enrobage externe comprenant au moins deux couches successives ayant des compositions différentes dont au moins une couche comprend de 50 à 100 % en poids de xylitol et dont au moins une autre couche comprend de 50 à 100 % en poids de polyol autre que le xylitol mais ne contient pas 50 % en poids ou plus d'isomaltulose hydrogéné.

2. Gomme à mâcher à deux composants selon la revendication 1, dans laquelle les couches de polyol autre que le xylitol sont appliquées avant les couches de xylitol.

3. Gomme à mâcher à deux composants selon la revendication 1 ou 2, dans laquelle la base de gomme comprend un élastomère choisi dans l'ensemble constitué par le polyisobutylène, un copolymère d'isobutylène-isoprène, un caoutchouc au styrène-butadiène, des latex naturels et des combinaisons de ceux-ci.

4. Gomme à mâcher à deux composants selon l'une quelconque des revendications 1 à 3, dans laquelle la base de gomme comprend une résine choisie dans l'ensemble constitué par l'acétate de polyvinyle, les résines terpéniques, les gommes-esters et des combinaisons de ceux-ci.

5. Gomme à mâcher à deux composants selon l'une quelconque des revendications 1 à 4, dans laquelle la base de gomme comprend des graisses et des huiles choisies dans l'ensemble constitué par des graisses animales, des huiles végétales, des huiles végétales hydrogénées, des huiles végétales partiellement hydrogénées, le beurre de cacao et des combinaisons de ceux-ci.

6. Gomme à mâcher à deux composants selon l'une quelconque des revendications 1 à 5, dans laquelle la base de gomme comprend une cire choisie dans l'ensemble constitué par la cire de paraffine, la cire microcristalline, la cire de candelilla, la cire de carnauba, la cire de polyéthylène et des combinaisons de celles-ci.

7. Gomme à mâcher à deux composants selon l'une quelconque des revendications 1 à 6, dans laquelle la base de gomme comprend un composant de charge choisi dans l'ensemble constitué par le carbonate de calcium, le carbonate de magnésium, le talc, le phosphate dicalcique et des combinaisons de ceux-ci.

8. Gomme à mâcher à deux composants selon l'une quelconque des revendications 1 à 7, dans laquelle la base de gomme comprend un émollient choisi dans l'ensemble constitué par le monostéarate de glycérol, le triacétate de glycérol et des combinaisons de ceux-ci.

9. Gomme à mâcher à deux composants selon l'une quelconque des revendications 1 à 8, dans laquelle le polyol autre que le xylitol est choisi dans l'ensemble constitué par le lactitol, le maltitol et le sorbitol.

10. Gomme à mâcher à deux composants selon l'une quelconque des revendications 1 à 9, dans laquelle des couches de l'enrobage dur externe comprennent au moins 90 % en poids de xylitol.

11. Gomme à mâcher à deux composants selon l'une quelconque des revendications 1 à 10, dans laquelle des couches de l'enrobage dur externe comprennent au moins 90 % en poids de polyol autre que le xylitol.

12. Gomme à mâcher à deux composants selon l'une quelconque des revendications 1 à 11, dans laquelle la partie de charge comprend un édulcorant sans sucre choisi dans l'ensemble constitué par le sorbitol, le mannitol, le xylitol, des hydrolysats d'amidon hydrogénés, le lactitol, le maltitol, l'isomaltulose hydrogéné et des combinaisons de ceux-ci.

13. Gomme à mâcher à deux composants selon l'une quelconque des revendications 1 à 12, dans laquelle la partie de charge comprend un édulcorant d'intensité élevée choisi dans l'ensemble constitué par le sucralose ^{(™)}, l'aspartame, des sels d'acésulfame, l'alitame, la saccharine et ses sels, l'acide cyclamique et ses sels, la glycyrrhizine, les dihydrochalcones, la thaumatine, la monelline et des combinaisons de ceux-ci.

14. Gomme à mâcher à deux composants selon l'une quelconque des revendications 1 à 13, dans laquelle la partie centrale de la gomme constitue de 50 à 80 % en poids de la gomme à mâcher enrobée, et l'enrobage externe constitue de 20 à 50 % en poids de la gomme à mâcher enrobée.

15. Gomme à mâcher à deux composants selon l'une quelconque des revendications 1 à 14, dans laquelle l'enrobage externe comprend, en outre, un agent aromatisant.

16. Gomme à mâcher à deux composants selon l'une quelconque des revendications 1 à 15, dans laquelle l'enrobage externe comprend, en outre, un agent de blanchiment.

17. Gomme à mâcher à deux composants selon l'une quelconque des revendications 1 à 16, dans laquelle l'enrobage externe comprend, en outre, un édulcorant artificiel.

18. Procédé de production d'une gomme à mâcher à enrobage dur à deux composants, comprenant les étapes consistant à :
former une partie centrale de gomme comprenant une partie de charge, une partie de base de gomme à mâcher et un ou plusieurs agents aromatisants ;
former un sirop d'enrobage liquide à base de polyol autre que le xylitol, comprenant un solvant et de 50 à 80 % en poids de polyol autre que le xylitol ;
appliquer une pluralité de couches du sirop d'enrobage liquide à base de polyol autre que le xylitol sur la partie centrale de la gomme ;
former un sirop d'enrobage liquide à base de xylitol, comprenant un solvant et de 50 à 85 % en poids de xylitol ;
appliquer une pluralité de couches du sirop d'enrobage liquide à base de xylitol sur la partie centrale de la gomme enrobée du polyol autre que le xylitol ; et
évaporer le solvant de chaque couche de sirop d'enrobage liquide de xylitol et de sirop d'enrobage liquide de polyol autre que le xylitol avant d'appliquer la couche suivante ;
le nombre de couches appliquées de xylitol et de polyol autre que le xylitol étant suffisant pour fournir un enrobage constituant de 10 à 65 % en poids du produit total de gomme à mâcher enrobée.

19. Procédé selon la revendication 18, dans lequel on applique le sirop d'enrobage liquide sur la partie centrale de la gomme à mâcher par pulvérisation.

20. Procédé selon la revendication 18 ou 19, dans lequel le solvant pour le sirop d'enrobage liquide comprend de l'eau.

21. Procédé selon les revendications 18 à 20, dans lequel au moins une couche de l'enrobage externe dur comprend un polyol autre que le xylitol, choisi dans l'ensemble constitué par le lactitol, le maltitol et le sorbitol.

22. Procédé selon l'une quelconque des revendications 18 à 21, dans lequel on applique au moins une couche d'enrobage à base de polyol autre que le xylitol avant d'appliquer au moins une couche d'enrobage à base de xylitol.

23. Procédé selon l'une quelconque des revendications 18 à 22, dans lequel :
on revêt la partie centrale de la gomme avec une combinaison de sorbitol et d'hydrolysat hydrogéné d'amidon ou avec une combinaison de polyols pour obtenir un enrobage interne mou ; et
on revêt l'enrobage interne mou avec un enrobage de xylitol formant une enveloppe dure.
